(19) Europäisches Patentamt
European Patent Office
Office européen des brevets

(11) Publication number: **0 203 896 B1**

(12) **EUROPEAN PATENT SPECIFICATION**

(45) Date of publication of patent specification: **18.12.91**   (51) Int. Cl.⁵: **B04C 3/06, B01D 45/16**

(21) Application number: **86830137.5**

(22) Date of filing: **23.05.86**

(54) A rising flow separator for a two-phase liquid-gas or liquid-vapour mixture.

(30) Priority: **27.05.85 IT 4812085**

(43) Date of publication of application:
**03.12.86 Bulletin 86/49**

(45) Publication of the grant of the patent:
**18.12.91 Bulletin 91/51**

(84) Designated Contracting States:
**DE FR GB SE**

(56) References cited:
EP-A- 0 055 413          WO-A-81/01110
FR-A- 1 213 496          FR-A- 2 027 434
FR-A- 2 239 275          US-A- 3 651 619

(73) Proprietor: **Ansaldo Componenti S.p.A. D.G.V.
Via Pacinotti, 20
I-16151 Genova-Sampierdarena(IT)**

Proprietor: **Comitato Nazionale per la Ricerca
e per lo Sviluppo dell'Energia Nucleare e
delle Energie Alternative
Viale Regina Margherita 125
I-00198 Roma(IT)**

(72) Inventor: **Avitabile, Marino
Via Poggio dei Pini 45
I-00061 Anguillara Sabazia RM(IT)**
Inventor: **Capuano, Giacomo
Via F. Carradori Località Fabbrica
I-00061 Anguillara Sabazia RM(IT)**
Inventor: **Pitimada, Domenico
Via I. del Lungo 28
I-00137 Roma RM(IT)**

(74) Representative: **Tonon, Gilberto et al
c/o Società Italiana Brevetti S.p.A. Piazza di
Pietra, 39
I-00186 Roma(IT)**

## Description

### DISCLOSURE

The present invention relates to an apparatus for the separation of the components or phases of a liquid-gas or liquid-vapour mixture in rising motion which uses the effects of centrifugal force to separate said two components or phases having a different density.

Apparatus of the above mentioned kind are known and find a specific use in conventional or nuclear-powered steam generators for the separation of the two-phase mixture steam-water and are located in the interior of the generators themselves in an environment which is filled, up to a given level, with the liquid phase.

In these apparatuses, such as those according to WO-A-81/01110 and EP-A-0055413, the separation of the phases of a liquid-gas or liquid-vapour mixture is effected by centrifugation promoted by a suitably shaped stationary blading located in the path of the flow of said mixture.

As a consequence of said centrifugation a vortex is created constituted by a nucleus of the lighter phase, i.e. the gas, surrounded by a thin layer or film of the heavier phase, i.e. the liquid. The above mentioned vortex is contained into a separation chamber which is provided with an end axial outlet for the lighter phase and either one or several radial outlets for the heavy phase. Whereas the separated light phase flows through said end axial outlet, a chamber concentrical and external with respect to said separation chamber collects the separated heavy phase, and owing to the effect of the force of gravity, conveys it downwards where it is discharged through discharge outlets.

The abovementioned known apparatus have the drawback in that they show acceptable performances only within a limited range of operative conditions; this in particular with regard to the rate of the two phases entering into the separator and the immersion depth of the collection chamber, which originates a hydraulic head acting on the delivery outlets for the separated liquid phase. An appreciable dependency of the performance upon the instantaneous fluctuations of the single flow rates also exists, caused by the kind of motion of the two phase mixture which is set up in the inflow conduit upstream of the separator.

The aim of the present invention is to overcome the abovementioned inconveniences, of the conventional similar devices or at least to minimise said inconveniences, by providing an apparatus wherein both the phases constituting the mixture are made to come out at different levels through outlets anyhow distributed along the peripheral wall of the separation chamber closed at the top eliminating for the gaseous phase the possibility of a direct exit through the top axial opening in said chamber adopted up to now in the known separators.

Thanks to the aforesaid artifice, the lowermost located outlets in the peripheral wall of the separation chamber are committed to the discharge of the liquid phase which constitutes the external envelope of said vortex while those at the top are committed to the discharge of the gaseous phase.

However, there is no net boundary between the outlets destined to the discharge of the liquid phase and those destined to the discharge of the gaseous phase. As a matter of fact the distribution between the former and the latter is automatically established with relationship to the operating conditions of the apparatus (flow rates of the single phases, hydraulic heads on the outflow outlets for the liquid).

The variation of one of the above mentioned parameters causes a change of pressure in the separation chamber; a negative feedback is set up, which for an increase in gas pressure causes an increase in the delivery outlets at the disposal of the gaseous phase. This favours, besides the stabilization of the operation of the apparatus, the achievement of higher performance, such as, for instance, an appreciable separation capability of the phases or components of the mixture within wide limits. The motion of the two-phase mixture at the inlet of the apparatus is on average a stationary one, but generally characterised by oscillation of the instantaneous flow rates of the two phases.

The performance of the apparatus of the invention is good in a range of operating conditions which is appreciably wider than that of the known similar apparatus.

Differently from the conventional apparatus, wherein the discharge of the phases occurs through fixed and distinct outlets, in the invention the quantity of outlets utilized for the outflow of the separated phases is variable as a function of the operating conditions.

The geometry adopted for the separation chamber and the mode of extracting the two phases from it according to the present invention reduce moreover the possibility of stagnation points for the liquid phase which constitute the source of possible re-mixing of the two separated phases because in the separation chamber the motion is directed upwards.

The separated liquid and gaseous phases, outflowing from the separation chamber, arrive into an annular external chamber which surrounds coaxially the separation chamber and which is provided at its top with an orifice for the discharge to the exterior of the gaseous phase, and at the bottom with a series of peripheral apertures for the discharge of the liquid phase.

Experimental laboratory tests, performed on exemplary prototypes of small and large scale in a wide range of experimental situations, have evidenced a surprisingly high capability of separating the phases or components of the process mixture within wide limits.

The present invention will be better disclosed hereinafter from the description of preferred embodiments, given as a non limiting example, with reference to the attached drawings, wherein:

figure 1 is an isometric view, with missing parts, of a first embodiment of the apparatus in question; and

figure 2 is an isometric view similar to figure 1 of a second embodiment of the apparatus in question.

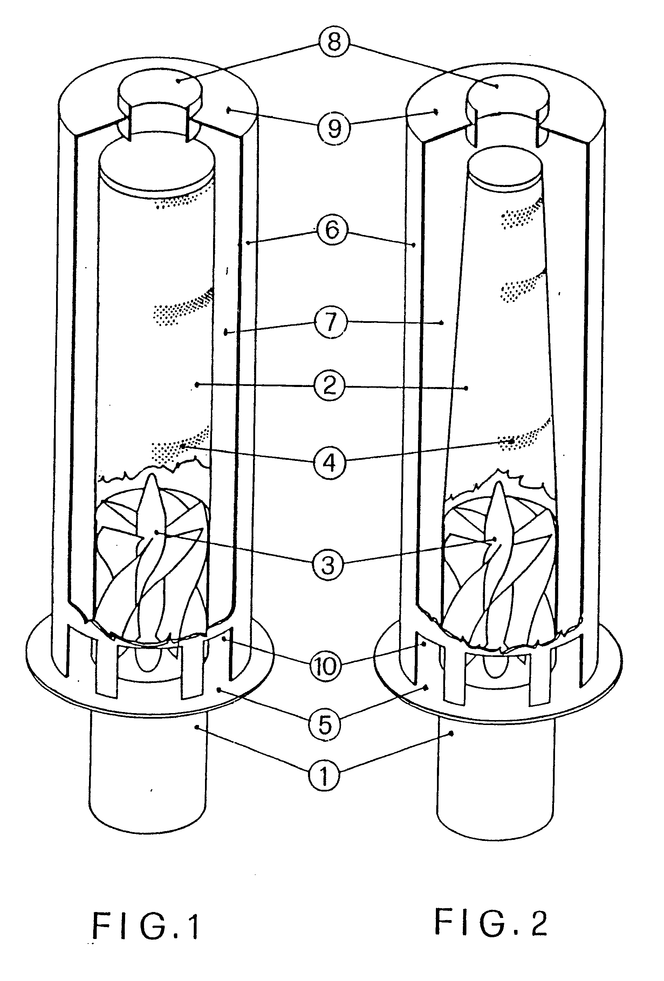

Passing to study figures 1 and 2 wherein a first and second substantially similar embodiment of the present invention are shown and in which the same components are indicated with the same reference numbers, number 1 indicates the inlet pipe which conveys with a rising motion the two-phase mixture to be divided into single phases into the separation chamber 2 comprising a tubular body with a closed top end having a cylindrical shape in the embodiment of figure 1 and a substantially frusto-conical shape in the embodiment of figure 2.

In the interior of the bottom portion of the separation chamber 2 a vortex generator 3 is installed comprising a suitable fixed blading shaped in order to impose on the rising two-phase mixture an helical motion such as to create a field of centrifugal force suitable for separating the two phases of said mixture having a different density, as will be better explained hereinafter.

Over the vortex generator 3 are machined into the peripheral wall of the separation chamber 2 a plurality of outlets 4 uniformly distributed for the outflow at different levels of the separated phases of said mixture.

At the exterior of the separation chamber 2, in a spaced and coaxial relationship is mounted on a supporting annular plate 5, integral with the lower end of the separation chamber 2, a cylindrical tubular wall 6 suitable for constituting a collection chamber 7 for each separated phase, to convey them to the respective outlet ports constituted, for the gaseous phase, by an orifice 8 shaped in a central position in the cover 9 of chamber 7, and for the liquid phase, by several openings 10 machined in an equally spaced manner circumferentially at the base of wall 6.

As may be derived from the above and from a study of figures 1 and 2, the sole difference existing between the first and the second embodiment of the apparatus according to the present invention consists in the shape of the separation chamber 2, which is cylindrical in the first embodiment and substantially frusto-conical in the second embodiment.

The reasons which have led to the adoption of the substantially frusto-conical shape of the separation chamber 2 of figure 2 are due to the ability to contain a greater spcing between the wall of said chamber and the external wall 6 in order to allow a greater passage area in the annular chamber 7 so as to reduce the outflow velocity of the two phases thus limiting both the possibility of entrainment of liquid by the gas or vapour, and the possibility of entrainment of gas or vapour by the liquid.

A film-scaper device may be provided downstream of said vortex generator to promote the outflow of the liquid phase near the discharge openings, said device comprising an annular member, peripherally fastened at the exterior of the lower end portion of an upper part of the separation chamber, integral with a short shell which extends downwards in a spaced relationship with respect to the upper end portion of a lower part of the separation chamber.

In the operation of the apparatus of the present invention, in the embodiments disclosed with reference to figures 1 and 2, a two-phase mixture is conveyed through the in-flow pipe 1 to the separator in question. In passing through the vortex generator 3, the mixture acquires a helical motion and due to the effects of the centrifugal force thus set up, the separation of the two phases having a different density occurs, with the formation of a nucleus constituted by the lighter gaseous phase surrounded by a film constituted by the heavier liquid phase. The liquid phase then contacts the internal wall of the separation chamber 2 and is gradually expelled into the collection chamber 7 through the openings 4 located at a lower height while the gaseous phase continuing in its rising motion is also expelled into the collection chamber 7 through the openings 4 located at a greater height.

In passing through the openings 4 the rotational motion of the two separated phases is substantially reduced so that in the collection chamber 7 the liquid phase flows downwards by gravity arriving at the outlet ports 10 which put it into communication with the exterior while the gaseous phase flows upwards until coming out through the discharge orifice 8.

The dimensions of both the orifice 8 and the openings 10 should be conveniently selected with reference to the operating conditions so that in the collection chamber 7 an hydrostatic head sufficient to prevent the exit of the separated gaseous phase through the discharge outlets for the liquid is always present.

The subdivision between the openings 4 of the separation chamber 2 committed to the outflow of the liquid phase and those committed to the outflow of the gaseous phase depends, as above mentioned, upon the operating conditions (flow rate of the two phases, hydrostatic heads) which also influence the pressure conditions set up in the interior of the separation chamber 2 owing to head losses caused by the outflow openings 4. Said pressure, by means of its variations, limits the variations in the subdivision of the respective openings 4 of the separation chamber 2 committed to the outflow of the two phases.

The possibility of pressure changes in the interior of the latter, causes a negative feedback effect with a stabilizing action; a wide range of operating conditions results therefrom, in which the performances of the separator are appreciably higher.

When said film-scraper is present, normally a prevailing part of the liquid phase outflows from the separation chamber through the passage between the upper end portion of the lower part of said separation chamber and said shell of the film-scraper device, when the liquid film that surrounds the gaseous core in said vortex formed in passing through the vortex generator impinges in the helical rising motion against the peripheral lower surface of said annular member of the film-scraper device.

The present invention is not limited to the disclosed embodiment example, but encompasses any change or modifications of the same.

## Claims

1. A rising flow separator for a two-phase liquid-gas or liquid-vapour mixture, comprising: a tubular chamber for the separation of the phases of said mixture; a vortex generator device located at the inlet of said separation chamber; a collecting chamber external and coaxial with respect to said separation chamber; said separator being characterized in that said separation chamber is provided with a top closure cover and in that in the circumferential wall of said separation chamber a plurality of not annular openings is distributed for the outflow at different levels of the separated phases of said mixture and said collection chamber is provided at the top with an orifice for the discharge of the separated gaseous phase and at the bottom with at least one aperture for the discharge of the separated liquid phase, the subdivision of said openings committed to the outflow of the separated gaseous phase and those committed to the outflow of the separated liquid phase being dependent upon the operating conditions such as the flow rates of the single phases and the hydraulic heads on the openings for the liquid phase.

2. A separator according to claim 1, whereing said separation chamber is constituted by a tubular cylindrical body.

3. A separator according to claim 1, wherein said separation chamber is constituted by a frusto-conical tubular body.

4. A separator according to any of the preceding claims, wherein said discharge orifice of the separated gaseous phase in said collection chamber is located at the center of the cover of said collection chamber.

5. A separator according to any of the preceding claims, wherein downstream of said vortex generator device a film-scraper device is provided to facilitate the outflow of said separated liquid phase through an annular opening in said separation chamber, in particular near said at least one discharge aperture of said collection chamber.

## Revendications

1. Séparateur à courants ascendants pour un mélange à deux phases, liquide-gaz ou liquide-vapeur, comprenant : une chambre tubulaire pour la séparation des phases du mélange ; un dispositif générateur de tourbillon situé à l'entrée de la chambre de séparation ; une chambre de recueil externe et coaxiale par rapport à la chambre de séparation ; le séparateur étant caractérisé en ce que la chambre de séparation est équipée d'un couvercle de fermeture supérieur et en ce que dans la paroi circonférentielle de la chambre de séparation sont réparties plusieurs ouvertures non annulaires pour l'écoulement à différents niveaux des phases séparées du mélange et la chambre de recueil est dotée sur le dessus d'un orifice pour l'évacuation de la phase gazeuse séparée et sur le dessous d'au moins une ouverture pour l'évacuation de la phase liquide séparée, la subdivision des ouvertures affectées à l'écoulement de la phase gazeuse séparée et celles affectées à l'écoulement de la phase liquide séparée étant fonction des conditions de service telles que les débits des différentes phases et des différences de pression hydraulique sur les ouvertures pour la phase liquide.

2. Séparateur selon la revendication 1, dans lequel la chambre de séparation est constituée d'un corps cylindrique tubulaire.

3. Séparateur selon la revendication 1, dans lequel la chambre de séparation est constituée par un corps tubulaire tronconique.

4. Séparateur selon l'une quelconque des revendications précédentes, dans lequel l'orifice d'évacuation de la phase gazeuse séparée dans la chambre de recueil est situé au centre du couvercle de la chambre de recueil.

5. Séparateur selon l'une quelconque des revendications précédentes, dans lequel en aval du dispositif générateur de tourbillon il est prévu un dispositif râcleur de pellicule pour faciliter l'écoulement de la phase liquide séparée par une ouverture annulaire dans la chambre de séparation, notamment à proximité au moins d'une ouverture d'évacuation de la chambre de recueil.

## Patentansprüche

1. Aufstromabscheider für eine Zweiphasen-Flüssigkeit/Gas- oder Flüssigkeits/Dampf-Mischung, mit:

einer rohrförmigen Kammer zum Abscheiden der Phasen der Mischung;

einer Wirbelgeneratorvorrichtung, die am Einlaß der Abscheidekammer angeordnet ist;

einer Sammelkammer, die außerhalb und koaxial bezüglich der Abscheidekammer befindlich ist;

wobei der Abscheider **dadurch gekennzeichnet** ist, daß die Abscheidekammer mit einer oberen Abdeckkappe versehen ist und daß in der Umfangswandung der Abscheidekammer eine Mehrzahl von nicht kreisförmigen Löchern verteilt ist zum Ausströmen der abgeschiedenen Phasen der Mischung in unterschiedlichen Stufen und daß die Sammelkammer am oberen Ende mit einer Öffnung zum Ausströmen der abgeschiedenen Gasphase und am Boden mit zumindest einer Aussparung zum Ausströmen der abgeschiedenen Flüssigphase versehen ist, wobei die Unterteilung der Löcher, die auf das Ausströmen der abgeschiedenen Gasphase und die auf das Ausströmen der abgeschiedenen Flüssigphase festgelegt sind, von den Betriebsbedingungen, wie den Strömungsgeschwindigkeiten der Einfachphasen und den Druckhöhen auf die Löcher für die Flüssigphase abhängt.

2. Abscheider nach Anspruch 1, wobei die Abscheidekammer aus einem rohrförmigen Zylinderkörper gebildet ist.

3. Abscheider nach Anspruch 1, wobei die Abscheidekammer aus einem kegelstumpfförmigen Rohrkörper gebildet ist.

4. Abscheider nach einem der vorhergehenden Ansprüche, wobei die Ausströmöffnung der abgeschiedenen Gasphase in der Sammelkammer in der Mitte der Kappe der Sammelkammer angeordnet ist.

5. Abscheider nach einem der vorhergehenden Ansprüche, wobei stromabwärts der Wirbelgeneratoreinrichtung eine Folienabstreifeinrichtung vorgesehen ist, um das Ausströmen der abgeschiedenen Flüssigphase durch ein kreisförmiges Loch in der Abscheidekammer, im besonderen nahe der zumindest einen Ausströmaussparung der Sammelkammer zu erleichtern.

FIG.1                    FIG.2